# EUROPÄISCHE PATENTSCHRIFT

(11) **EP 1 855 945 B1**
(45) Veröffentlichungstag und Bekanntmachung des Hinweises auf die Patenterteilung: **17.06.2009**
(21) Anmeldenummer: 06707348.6
(22) Anmeldetag: 01.03.2006
(51) Int. Cl.: B65B 47/02, B65B 9/04, B29C 51/42

(54) **VORRICHTUNG ZUR HERSTELLUNG VON TIEFGEZOGENEN VERPACKUNGSMULDEN MIT EINEM GEKÜHLTEN FORMUNTERTEIL**
DEVICE FOR PRODUCING DEEP PACKAGING TRAYS COMPRISING A COOLED LOWER MOULD SECTION
DISPOSITIF POUR PRODUIRE DES BARQUETTES D'EMBALLAGE PAR EMBOUTISSAGE PROFOND, COMPRENANT UNE PARTIE DE FORMAGE INFERIEURE REFROIDIE

(30) Priorität: 01.03.2005 DE 102005009868; 01.03.2005 DE 102005009870; 18.04.2005 DE 102005017937
(43) Veröffentlichungstag der Anmeldung: 21.11.2007
(73) Patentinhaber: CFS Germany GmbH, 35216 Biedenkopf-Wallau (DE)
(72) Erfinder: FEISEL, Jörg, 35216 Biedenkopf (DE); MEYER, Klaus, 35236 Breidenbach (DE)
(74) Vertreter: Wolff, Felix
(86) Internationale Anmeldenummer: PCT/EP2006/001868
(87) Internationale Veröffentlichungsnummer: WO 2006/092288

(56) Entgegenhaltungen:
- EP-A- 0 186 729
- DE-B- 1 145 087
- US-A- 3 958 394
- US-A- 4 932 856

## Beschreibung

Die vorliegende Erfindung betrifft eine Vorrichtung und ein Verfahren zur Herstellung von tiefgezogenen Verpackungsmulden sowie eine Verpackungsmaschine, die die erfindungsgemäße Vorrichtung aufweist.

Lebensmittel werden heutzutage immer öfter in Kunststoffverpackungen angeboten, die aus einer Verpackungsmulde, in die die Lebensmittel eingelegt werden, und einer Deckelfolie, mit der die Verpackungsmulde verschlossen wird, bestehen. Die Verpackungsmulden werden in der Regel durch Tiefziehen aus einer planen Folienbahn hergestellt, wobei das Tiefziehen gemäß dem stand der Technik mit einem beheizten Tiefziehwerkzeug erfolgt. Verpackungsmulden, die mit einem derartigen Werkzeug hergestellt werden, haben jedoch den Nachteil, dass die tiefgezogene Folie beim oder nach dem Tiefziehen schrumpft und dadurch insbesondere die Ränder der Verpackungen nicht gerade sind. Vorrichtungen und Verfahren zur Herstellung von Verpackungen sind beispielsweise aus der US-A-3 958 394, der EP-A-0 186 729, der DE 1145 087 und der US-A-4 932 856 bekannt wobei die US-A-3 958 394 und die US-A-4 932 856 den Oberbegriffen der Ansprüche 1 bzw. 7 entsprechen.

Es war deshalb die Aufgabe der vorliegenden Erfindung, eine Vorrichtung zur Verfügung zu stellen, bei der der Schrumpfeffekt zumindest vermindert wird.

Gelöst wird die Aufgabe mit einer Vorrichtung gemäß Anspruch 1.

Es war für den Fachmann überaus erstaunlich und nicht zu erwarten, dass sich mit einer derartigen Vorrichtung Verpackungsmulden mit geraden Verpackungsrändem aus einer schrumpffähigen Kunststofffolie herstellen lassen und/oder, dass die ungewollte Rückschrumpfung der hergestellten Verpackungsmulde unmittelbar nach dem Tiefziehen zumindest vermindert ist. Dadurch lassen sich Verpackungsbehälter mit einer ganz neuen Erscheinungsform und einer sehr reproduzierbaren Größe herstellen.

Eine schrumpffähige Folie im Sinne der Erfindung ist eine thermoformbare, vorzugsweise tiefziehfähige Mehrschichtfolie mit einer Wärmeschrumpffähigkeit in Längs- und in Querrichtung von jeweils wenigstens 20%, wobei die Wärmeschrumpffähigkeit durch Thermoformung im wesentlichen nicht beeinflusst wird. Bevorzugt beträgt die Wärmeschrumpffähigkeit der erfindungsgemäßen Mehrschichtfolien in Längs- und in Querrichtung jeweils wenigstens 25%, bevorzugter wenigstens 30%, noch bevorzugter wenigstens 35%, am bevorzugtesten wenigstens 40% und insbesondere wenigstens 45%. Derartige Folien werden beispielsweise in der DE 10 2005 017 937.1 offenbart, die hiermit als Referenz eingeführt wird und somit als Teil der Offenbarung gilt.

Erfindungsgemäß ist das Tiefziehwerkzeug beim Tiefziehen gekühlt. Vorzugsweise weist das Tiefziehwerkzeug dafür Kühlmittel auf. Derartige Kühlmittel können beispielsweise Kühlleitungen sein, die im Bereich des Tiefziehwerkzeugs angeordnet sind und durch die ein Kühlmedium, beispielsweise eine Kühlflüssigkeit oder ein Kühlgas, zirkuliert.

Erfindungsgemäß weist die Vorrichtung Haltemittel auf, so dass die Folie zwischen dem Haltemittel und dem Tiefziehwerkzeug einspannbar ist. Vorzugsweise handelt es sich bei dem Haltemittel um einen Klemmrahmen. Vorzugsweise ist das Haltemittel vertikal verschiebbar angeordnet. Vorzugsweise wird die Folienbahn mit dem Haltemittel fixiert bevor das Tiefziehen erfolgt. In einer erfindungsgemäßen Ausführungsform der vorliegenden Erfindung ist dieses Haltemittel ebenfalls mit einem Kühlmittel versehen, das an denselben Kühlmittelkreislauf wie das Tiefziehwerkzeug oder an einen anderen Kühlkreislauf angeschlossen sein kann. Als Kühlmittel eignet sich insbesondere ein Kühlmittel, das beispielsweise auch in Kühlschranken und dergleichen Anwendung findet. Diese Ausführungsform der vorliegenden Erfindung hat den Vorteil, dass der Bereich der Verpackungsmulde an den in einem weiteren Verfahrensschritt eine Deckelfolie gesiegelt wird keine oder nur sehr geringe Spannungen aufweist, was in weniger Leckagen im Bereich der Siegelnaht resultiert.

Weiterhin bevorzugt weist die erfindungsgemäße Vorrichtung ein Heizmittel, besonders bevorzugt eine Heizplatte auf, mit der die Folienbahn insbesondere vor dem Tiefziehen aufheizbar ist. Mit dem Heizmittel wird die Folienbahn zumindest bereichsweise bis zur Plastifizierungstemperatur erwärmt. Vorzugsweise erfolgt die Erwärmung sehr schnell. Besonders bevorzugt weist die erfindungsgemäße Vorrichtung Mittel auf, mit denen der Kontakt und damit der Wärmeübergang zwischen der Folienbahn und dem Heizmittel verbessert wird. Besonders bevorzugt wird dieser Kontakt durch Unter- und/oder Überdruck verbessert, der die Foliebahn an die Heizmittel saugt und/oder drückt. Für den Fall, dass mehrere Verpackungsmulden gleichzeitig hergestellt werden, weist die erfindungsgemäße Vorrichtung vorzugsweise pro herzustellende Verpackungsmulde ein Heizmittel auf. Vorzugsweise sind die Heizmittel vertikal verschiebbar, an und abschaltbar und/oder Temperatur-regelbar. Nachdem die Foliebahn erwärmt worden ist und besonders bevorzugt vor dem Tiefziehen wird das Heizmittel wieder von der Folienbahn entfernt und/oder abgeschaltet, um eine Überhitzung der Folienbahn zu vermeiden und um zu verhindern, dass bei der Kühlung des Tiefziehwerkzeuges beziehungsweise des Haltemittels zu viel Wärme abgeführt werden muss. Vorzugsweise erfolgt die Erwärmung lokal sehr gezielt und sehr schnell, so dass nur die gewünschten Bereiche erwärmt werden. Nach oder beim Tiefziehen wird die Folienbahn dann möglichst schnell abgekühlt, um eine ungewollte Rückverformung der thermogeformten Verpackungsmulden zu vermeiden. Der Fachmann erkennt, dass die Erwärmung und Kühlung auch gleichzeitig erfolgen kann, um zu vermeiden, dass sich gewisse Bereiche der Folienbahn während deren Erwärmung miterwärmen und/oder um eine unerwünschte Aufwärmung dieser Bereiche zu vermindern und/oder um eine ungewollte Rückverformung zu vermeiden.

In einer weiteren bevorzugten Ausführungsform der vorliegenden Erfindung weist die erfindungsgemäße Vorrichtung Vakuum- und/oder Druckmittel auf, mit der die Folienbahn in das Tiefziehwerkzeug hineingedrückt bzw. hineingezogen wird und dabei seine abschließende Form erhält bzw. um den Wärmeübergang zwischen der Folienbahn und dem Tiefziehwerkzeug zu verbessern. Dieselben oder andere Vakuum- und/oder Druckmittel können auch dafür herangezogen werden, um den Kontakt zwischen der unverformten Folienbahn und dem Heizmittel zu verbessern. Folienbahn und dem Tiefziehwerkzeug zu verbessern. Dieselben oder andere Vakuum- und/oder Druckmittel können auch dafür herangezogen werden, um den Kontakt zwischen der unverformten Folienbahn und dem Heizmittel zu verbessern.

Die erfindungsgemäße Vorrichtung eignet sich insbesondere zum Herstellen von schrumpffähigen Verpackungsmulden für Verpackungen. Ein weiterer Gegenstand der vorliegenden Erfindung ist deshalb eine Verpackungsmaschine, vorzugsweise eine sogenannte Form- Fill- Seal-Verpackungsmaschine oder ein sogenannter Trayformer.

Ein weiterer Gegenstand der vorliegende Erfindung ist ein Verfahren gemäß Anspruch 7.

Es war für den Fachmann überaus erstaunlich und nicht zu erwarten, dass sich mit einem derartigen Verfahren Verpackungsmulden mit geraden Rändern herstellen lassen und/oder dass keine ungewollte Schrumpfung nach dem Tiefziehen erfolgt. Dadurch lassen sich Verpackungsbehälter mit einer ganz neuen Erscheinungsform und einer sehr reproduzierbaren Größe herstellen.

Vorzugsweise wird die Folienbahn vor dem Tiefziehen eingespannt. Vorzugsweise erfolgt das Einspannen der Folienbahn mit einem Klemmrahmen. Besonders bevorzugt ist dieser Klemmrahmen gekühlt und am meisten bevorzugt vertikal verschiebbar angeordnet. Ein gekühlter Klemmrahmen hat den Vorteil, dass der spätere Siegelbereich zumindest nahezu spannungsfrei ist, was zu weniger Leckagen im Siegelbreich führt.

Weiterhin bevorzugt wird die Folienbahn vor dem Tiefziehen aufgewärmt. Vorzugsweise erfolgt das Aufwärmen und Kühlen seitlich versetzt, wobei das Aufwärmen vorzugsweise vor dem Kühlen erfolgt. Weiterhin bevorzugt wird eine Oberfläche der Folienbahn aufgewärmt und die gegenüberliegende Oberfläche gekühlt. In einer weiteren bevorzugten Ausführungsform der vorliegenden Erfindung erfolgt das Erwärmen und Kühlen gleichzeitig, wobei die Folienbahn bereichsweise vorzugsweise ein Heizmittel zugeordnet. Dadurch kann die benötigte Wärme lokal sehr gezielt in die Folienbahn eingebracht werden.

Das Tiefziehen kann auf jede dem Fachmann geläufige Art und Weise erfolgen. Vorzugsweise erfolgt das Tiefziehen jedoch durch Über- und/oder Unterdruck (Vakuum). Weiterhin bevorzugt erfolgt das Tiefziehen mit einem Stempel oder das Tiefziehen wird mit einem Stempel unterstützt, wobei der Stempel und das Heizmittel ein Bauteil sein können.

Erfindungsgemäß wird die Folienbahn zumindest bereichsweise vorm, beim und/oder nach dem Tiefziehen gekühlt. Insbesondere der Bereich der tiefgezogen worden ist, wird beim und/oder nach dem Tiefziehen so lange gekühl, bis keine ungewollte Rückverformung des tiefgezogenen Bereichs mehr erfolgt. In der Regel ist dies bei Temperaturen unterhalb der Plastifizierungstemperatur der jeweiligen Folie gegeben.

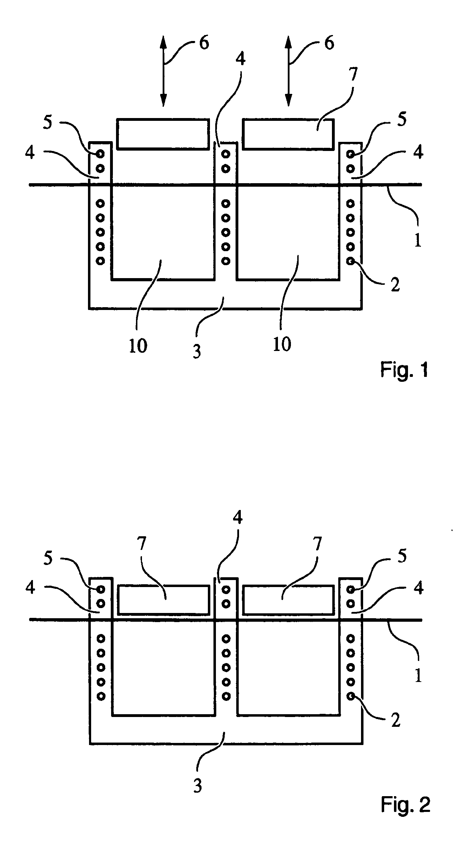

Im Folgenden wird die Erfindung anhand der Figuren 1 bis 5 erläutert. Dieses Erläuterungen sind lediglich beispielhaft und schränken den allgemeinen Erfindungsgedanken nicht ein. Die Erläuterungen gelten für die erfindungsgemäße Vorrichtung, die erfindungsgemäße Verpackung sowie das erfindungsgemäße Verfahren gleichermaßen.
**Figur 1** zeigt die erfindungsgemäße Vorrichtung vor dem Tiefziehen.
**Figur 2** zeigt das Erwärmen der Folienbahn.
**Figur 3** zeigt das Tiefziehen der Verpackungsmulde.
**Figur 4** zeigt das Lösen der Halterung.
**Figur 5** zeigt die resultierende Verpackungsmulde.
**Figur 6** zeigt die erfindungsgemäße Vorrichtung
**Figur 7** zeigt eine Verpackungsmaschine zur Herstellung eines shrinkplate
**Figur 8** zeigt eine Verpackungsmaschine zur Herstellung eines shrinkpacks

In Figur 1 ist die erfindungsgemäße Vorrichtung dargestellt, die ein Tiefziehwerkzeug 3 mit mehreren Tiefziehkammern 10 aufweist. Erfindungsgemäß ist dieses Tiefziehwerkzeug gekühlt, wobei die Kühlung in dem vorliegenden Fall durch Bohrung 2 erfolgt, durch die ein Kühlmedium geführt wird. Oberhalb des Tiefziehwerkzeuges 3 befindet sich die zu verformende Folienbahn 1, die zwischen dem Tiefziehwerkzeug 3 und einem Klemmrahmen 4 eingespannt ist. Der Klemmrahmen 4 ist in dem vorliegenden Fall mittels der Bohrung 5, durch die ein Kühlmittel geführt wird, ebenfalls kühlbar. Oberhalb der Folienbahn 1 befinden sich Heizplatten 7, die wie durch die Doppelpfeile 6 dargestellt, anhebbar bzw. absenkbar sind. Der Fachmann weiß, dass das Tiefziehwerkzeug 3 ebenfalls vertikal bewegbar ist.

Figur 2 zeigt das Erwärmen der zwischen dem Klemmrahmen 4 und dem Tiefziehwerkzeug 3 eingespannten Folienbahn 1. Dafür wurden die Heizplatten 7 abgesenkt, so dass sie vorzugsweise in Kontakt mit der Folienbahn stehen. Die Folienbahn wird solange aufgewärmt, bis sie im Bereich der Wärmeplatte die gewünschte Temperatur aufweist. Vorzugsweise erfolgt die Erwärmung zeitgesteuert.

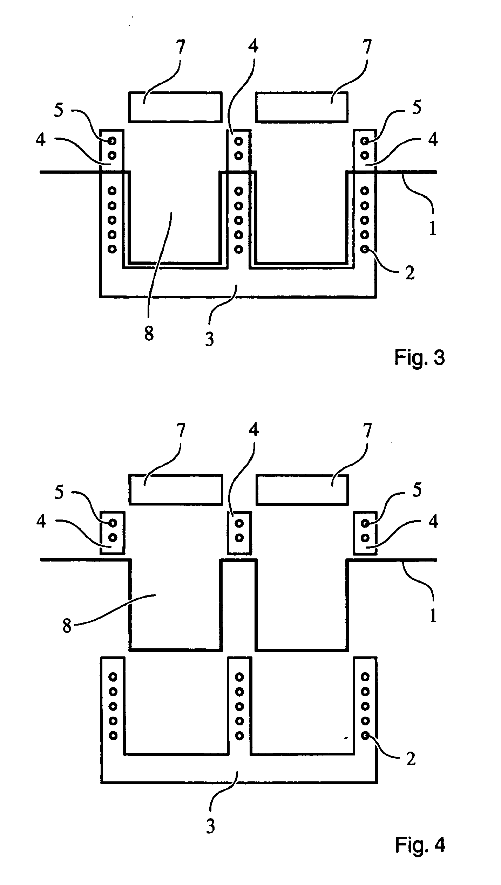

Sobald die Folie hinreichend erwärmt wurde, werden die Heizplatten wieder angehoben und das Tiefziehen der Folienbahn 1 zur Herstellung der Verpackungsmulden 8 erfolgt (Fig. 3). In dem vorliegenden Fall sind die Tiefziehkammern 10 mit Vakuum beaufschlagbar, mit dem die Folienbahn wie dargestellt verformt wird. Während des gesamten Aufheiz- und Tiefziehprozesses werden das Tiefziehwerkzeug und der Klemmrahmen gekühlt.

Sobald die Verpackungsmulden 8 tiefgezogen sind (Figur 4), wird das Tiefziehwerkzeug 3 abgesenkt, so dass sich die Verpackungsmulden 8 aus dem Tiefziehwerkzeug 3 entformen. Das Tiefziehwerkzeug wird soweit abgesenkt, dass die hergestellten Verpackungsmulden aus dem Tiefziehbereich heraustransportiert werden können und eine neuerliche Verformung der Folienbahn 1 erfolgen kann.

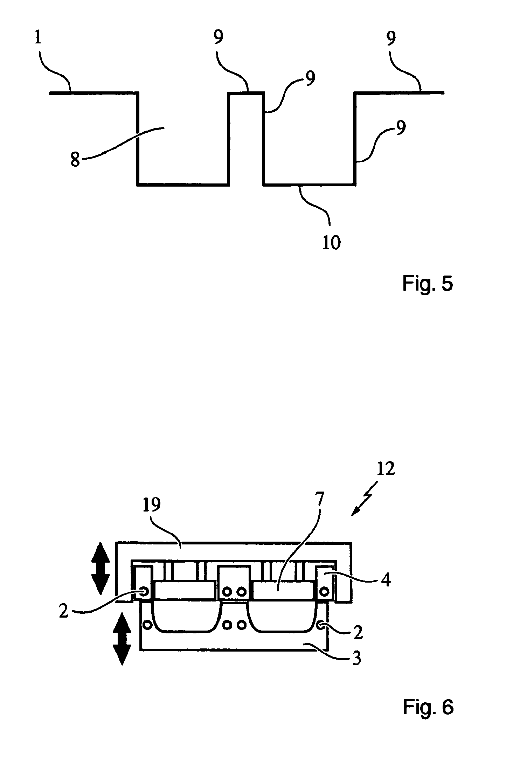

In Figur 5 sind die fertiggestellten Verpackungsmulden dargestellt. Durch die Kühlung der Tiefziehform sind die Packungsränder 9 und/oder der Boden der Verpackung gerade, weil die Folienbahn nach dem Tiefziehen gar nicht oder nur sehr wenig nach oder beim Tiefziehen schrumpft.

Figur 6 zeigt die erfindungsgemäße Vorrichtung zur Herstellung von tiefgezogenen Kunstoffverpackungsmulden aus schrumpffähigen Folien aus einer schrumpffähigen Folienbahn. Die Vorrichtung 12 weist ein Unterwerkzeug 3 und ein Oberwerkzeug 19 auf. Das Unterwerkzeug 3 weist das Negativ der Form der herzustellenden Verpackungsmulde auf. In das Unterwerkzeug sind Kanäle 2 eingearbeitet, durch die ein Kühlmittel zirkuliert mit dem das Unterwerkzeug gekühlt wird. Wie durch den Doppelpfeil angedeutet, ist das Unterwerkzeug absenkbar bzw. anhebbar. Zwischen dem Unterwerkzeug und dem Oberwerkzeug verläuft die nicht dargestellte Folienbahn. Das Oberwerkzeug 19 ist ebenfalls anhebbar bzw. absenkbar. Dasselbe gilt für den Klemmrahmen 4 und die Heizmittel 7. Mit dem Klemmrahmen wird die Folienbahn gegen das Unterwerkzeug gedrückt und festgeklemmt, damit sie tiefgezogen werden kann. Der Klemmrahmen 4 weist darüber hinaus auch Kanäle 2 auf, durch die ein Kühlmittel zirkuliert, so dass der Rahmen der Klemmrahmen 4 kühlbar ist. Die Kühlung des Klemmrahmens hat insbesondere den Vorteil, dass sich die Folienbahn, die sich unter dem Klemmrahmen befindet nicht erwärmt wird und somit spannungsfrei ist. An diesen Bereich wird später die Oberfolie gesiegelt. Dadurch dass dieser Bereich spannungsfrei ist, weist die Siegelung der später resultierenden Verpackung eine sehr hohe Dichtigkeit auf. Die erfindungsgemäße Vorrichtung weist pro herzustellender Verpackungsmulde eine separat anzusteuernde Heizung 7 auf, die gegebenenfalls aus mehreren Heizelementen, beispielsweise Heizpatronen bestehen kann. Mit diesem(diesen) Heizelement(en) wird die Folienbahn möglichst schnell erwärmt. Um den Wärmeübergang zwischen der Folienbahn und der jeweiligen Heizmitteln zu verbessert, kann in dem Bereich unter der Folienbahn ein Überdruck erzeugt werden, der die Folienbahn gegen das Heizmittel drückt und damit den Wärmeübergang verbessert. Der Fachmann erkennt, dass auch zwischen der Folienbahn und dem Heizmittel 7 ein Unterdruck erzeugt werden kann, der die Folienbahn gegen das Heizmittel saugt. Sobald die Folienbahn ihre Plastifizierungstemperatur erreicht hat, wird sie mit den Heizmitteln 7, die dann gleichzeitig als Stempel wirken in die jeweilige Tiefziehform gedrückt und/oder es wird in der Tiefziehform ein Unterdruck angelegt, der die Folienbahn in die Tiefziehform hineinsaugt. Diese Tiefziehform ist gekühlt, so dass die Folienbahn beim und/oder unmittelbar nach dem Tiefziehen gekühlt wird. Diese Kühlung erfolgt so lange bis die Folienbahn eine Temperatur erreicht hat, bei der eine ungewollte Rückverformung der Verpackungsmulde aufgrund der Schrumpffähigkeit der Folie ausgeschlossen werden kann.

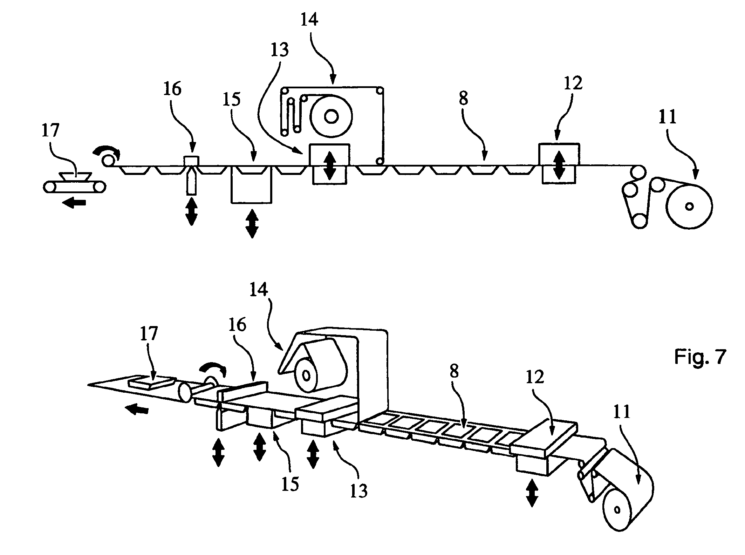

Figur 7 zeigt eine Verpackungsmaschinen zur Herstellung einer shrinkplate, d.h. einer Verpackung mit einer schrumpffähigen Verpackungsmulde, die mit einer nicht schrumpffähigen vergleichsweise starren Deckelfolie verschlossen ist. Von einer Rolle 11 wird taktweise eine Folienbahn abgerollt und in der Tiefziehvorrichtung 12 werden Verpackungsmulden 8 in die Folienbahn eingeformt. Diese Verpackungsmulden 8 werden dann mit einem nicht dargestellten Verpackungsgut gefüllt und danach in der Siegelstation 13 mit einer Deckelfolie 14 verschlossen. In dem vorliegenden Fall besteht die Folienbahn 11 aus einer schrumpffähigen Folie während die Folienbahn 14 nicht schrumpffähig und relativ starr ist, so dass sie wie eine Tablett wirkt. Nach dem Siegeln wird die Verpackungsmulde in einer Schrumpfvorrichtung 15 geschrumpft, wobei nur die tiefgezogene Verpackungsmulde mit einem heißen Medium, beispielsweise heiße Luft, Dampf oder Wasser in Berührung kommt. Die so fertiggestellten geschrumpften Verpackungen werden so dann mit der Scheidvorrichtung 16 vereinzelt und als fertiggestellte Verpackung 17 abtransportiert. Die jeweiligen Doppelpfeile zeigen, dass ein oder zwei Aggregate der jeweiligen Station anhebbar bzw. absenkbar sind.

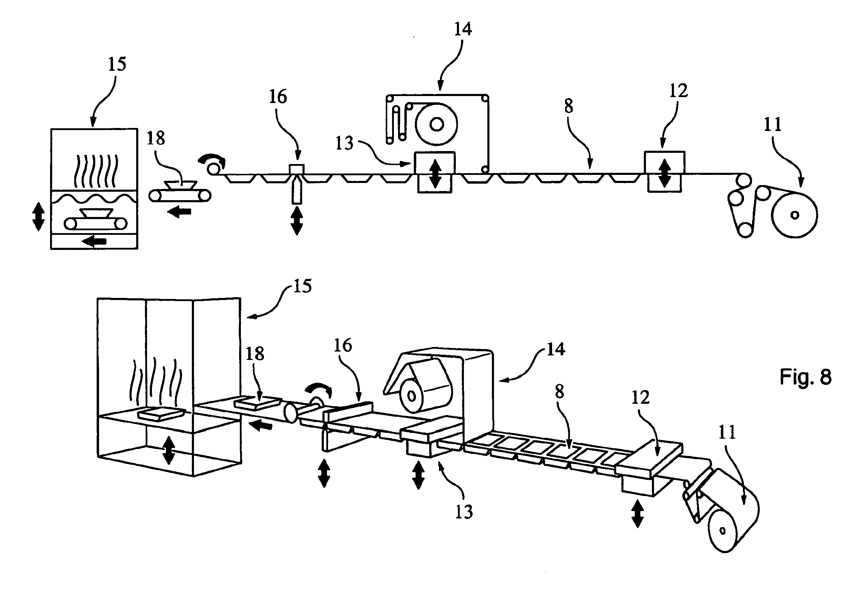

Figur 8 zeigt eine Verpackungsmaschine zur Herstellung einer shrinkpack in zwei Ansichten. Ein shrinkpack besteht aus einer schrumpffähigen Ober- und einer schrumpffähigen Unterfolie. Wiederum wird von einer Rolle 11 die schrumpffähigen Folienbahn abgerollt und in einer Formstation 12 die Verpackungsmulden 8 in die Folienbahn durch Tiefziehen eingeformt. Nachdem die Verpackungsmulden mit einem nicht dargestellten Verpackungsgut befüllt worden sind, wird die Verpackungsmulde mit einer Folienbahn 14 in der Siegelstation 13 durch Siegeln verschlossen. In dem vorliegenden Fall handelt es sich bei der Deckelfolie ebenfalls um eine schrumpffähige Folie. In einem nächsten Verfahrensschritt werden die Verpackungen in einer Schneidstation 16 vereinzelt. Die so hergestellten Verpackungen 18 werden in einen Schrumpftunnel geschrumpft, in dem sie von allen Seiten mit kochendem Wasser, heißer Luft oder Dampf beaufschlagt werden. Die jeweiligen Doppelpfeile zeigen, dass ein oder zwei Aggregate der jeweiligen Station anhebbar bzw. absenkbar sind.

### Bezugszeichen

- 1: Folienbahn
- 2: Kühlmittel
- 3: Tiefziehwerkzeug, Unterwerkzeug
- 4: Haltemittel, Klemmrahmen
- 5: Kühlmittel
- 6: Boden der Verpackungsmulde, Doppelpfeil
- 7: Heizmittel, Heizplatten, Heizelement, Heizpatrone
- 8: Verpackungsmulde
- 9: Packungsränder
- 10: Packungsboden
- 11: Folienrolle
- 12: Tiefziehstation
- 13: Siegelstation
- 14: Oberfolie
- 15: Schrumpfstation, Schrumpftunnel
- 16: Schneidstation
- 17: Fertiggestellte, geschrumpfte Verpackung
- 18: Verpackung vor dem Schrumpfen
- 19: Oberwerkzeug

## Patentansprüche

1. Vorrichtung zur Herstellung von tiefgezogenen Kunststoffverpackungsmulden (8) aus einer schrumpffähigen Folienbahn (1) mit einem Tiefziehwerkzeug (3), wobei das Tiefziehwerkzeug (3) beim Tiefziehen gekühlt ist und die Folienbahn (1) zwischen einem Haltemittel (4) und dem Tiefziehwerkzeug (3) einspannbar ist, **dadurch gekennzeichnet, dass** das Haltemittel (4) mit Kühlmitteln (5) kühlbar ist.

2. Vorrichtung nach Anspruch 1, **dadurch gekennzeichnet, dass** das Tiefziehwerkzeug (3) Kühlmittel (2) aufweist.

3. Vorrichtung nach einem der voranstehenden Ansprüche, **dadurch gekennzeichnet, dass** sie ein Heizmittel (7), vorzugsweise eine Heizplatte, aufweist, mit der die Folienbahn aufheizbar ist.

4. Vorrichtung nach Anspruch 3, **dadurch gekennzeichnet, dass** die Heizplatte (7) als Tiefziehstempel ausgeführt ist.

5. Vorrichtung nach einem der voranstehenden Ansprüche, **dadurch gekennzeichnet, dass** Vakuum- und/oder Druckmittel zum Tiefziehen der Folie aufweist.

6. Verpackungsmaschine aufweisend eine Vorrichtung nach einem der voranstehenden Ansprüche.

7. Verfahren zur Herstellung einer tiefgezogenen Verpackungsmulde (8) aus einer Folienbahn (1), wobei die Folienbahn (1) beim Tiefziehen teilweise gekühlt wird, **dadurch gekennzeichnet, dass** der Teilbereich der Folienbahn (1), aus dem die Mulde (8) geformt wird, aufgewärmt und der Siegelbereich (9) der Verpackungsmulde zumindest beim Aufheizen, gekühlt wird.

8. Verfahren nach Anspruch 7, **dadurch gekennzeichnet, dass** die Folienbahn (1) vor dem Tiefziehen eingespannt wird.

9. Verfahren nach einem der Ansprüche 7 oder 8, **dadurch gekennzeichnet, dass** die Folienbahn (1) durch Über- und/oder Unterdruck verformt wird.

## Claims

1. Device for producing thermoformed plastic packaging trays (8) from a shrinkable film web (1) with a thermoforming mould (3), the thermoforming mould (3) being cooled during the thermoforming and it being possible for the film web (1) to be clamped between a holding means (4) and the thermoforming mould (3), **characterized in that** the holding means (4) can be cooled by cooling means (5).

2. Device according to Claim 1, **characterized in that** the thermoforming mould (3) has cooling means (2).

3. Device according to one of the preceding claims, **characterized in that** it has a heating means (7), preferably a heating plate, with which the film web can be heated up.

4. Device according to Claim 3, **characterized in that** the heating plate (7) is configured as a thermoforming die.

5. Device according to one of the preceding claims, **characterized in that** it has vacuum and/or pressure means for thermoforming the film.

6. Packaging machine having a device according to one of the preceding claims.

7. Method for producing a thermoformed packaging tray (8) from a film web (1), the film web (1) being partially cooled during the thermoforming, **characterized in that** the partial region of the film web (1) from which the tray (8) is moulded is heated up and the sealing region (9) of the packaging tray is cooled, at least during the heating up.

8. Method according to Claim 7, **characterized in that** the film web (1) is clamped before the thermoforming.

9. Method according to either of Claims 7 and 8, **characterized in that** the film web (1) is deformed by positive and/or negative pressure.

## Revendications

1. Dispositif pour fabriquer des barquettes d'emballage en plastique (8) embouties à partir d'une bande de feuille rétractable (1) avec un outil d'emboutissage (3), l'outil d'emboutissage (3) étant refroidi lors de l'emboutissage et la bande de feuille (1) pouvant être serrée entre un moyen de retenue (4) et l'outil d'emboutissage (3), **caractérisé en ce que** le moyen de retenue (4) peut être refroidi avec des moyens de refroidissement (5).

2. Dispositif selon la revendication 1, **caractérisé en ce que** l'outil d'emboutissage (3) présente des moyens de refroidissement (2).

3. Dispositif selon l'une quelconque des revendications précédentes, **caractérisé en ce qu'**il présente un moyen de chauffage (7), de préférence une plaque chauffante avec laquelle la bande de feuille peut être chauffée.

4. Dispositif selon la revendication 3, **caractérisé en ce que** la plaque chauffante (7) est réalisée sous forme de poinçon d'emboutissage.

5. Dispositif selon l'une quelconque des revendications précédentes, **caractérisé en ce qu'**il comprend des moyens de dépression et/ou de pression pour l'emboutissage de la feuille.

6. Machine d'emballage présentant un dispositif selon l'une quelconque des revendications précédentes.

7. Procédé de fabrication d'une barquette d'emballage emboutie (8) à partir d'une bande de feuille (1), la bande de feuille (1) étant refroidie partiellement lors de l'emboutissage, **caractérisé en ce que** la région partielle de la bande de feuille (1) dans laquelle est formée la barquette (8) est chauffée et la région de scellage (9) de la barquette d'emballage est refroidie, au moins lors du chauffage.

8. Procédé selon la revendication 7, **caractérisé en ce que** la bande de feuille (1) est serrée avant l'emboutissage.

9. Procédé selon l'une quelconque des revendications 7 et 8, **caractérisé en ce que** la bande de feuille (1) est déformée par surpression et/ou dépression.
